Europäisches Patentamt

European Patent Office

Office européen des brevets

(19)

(11) Veröffentlichungsnummer: **0 158 279**

**A2**

(12) ## EUROPÄISCHE PATENTANMELDUNG

(21) Anmeldenummer: 85104061.8

(22) Anmeldetag: 03.04.85

(51) Int. Cl.⁴: **B 60 G 3/26**
**B 60 G 7/02**

(30) Priorität: 10.04.84 DE 3413450

(43) Veröffentlichungstag der Anmeldung:
16.10.85 Patentblatt 85/42

(84) Benannte Vertragsstaaten:
DE FR GB IT SE

(71) Anmelder: AUDI AG
Postfach 2 20
D-8070 Ingolstadt(DE)

(72) Erfinder: Kübler, Günter
Hauptstrasse 5
D-7101 Abstatt-Happenbach(DE)

(72) Erfinder: Souczek, Rainer
Hauffstrasse 74
D-7103 Schwaigern(DE)

(74) Vertreter: Speidel, Eberhardt
Postfach 1320 Waldpromenade 26
D-8035 Gauting(DE)

(54) Einzelradaufhängung.

(57) Bei einer Einzelradaufhängung für die Hinterräder eines Kraftfahrzeuges ist ein beim Abbremsen des Fahrzeuges auf Zug beanspruchter Lenker vorgesehen, dessen vorderes Ende vor der Hinterachse über ein elastisches Lager am Fahrzeugaufbau befestigt ist. Um beim Abbremsen des Fahrzeuges eine Verstellung des Rades in Richtung Vorspur zu erreichen, ist zwischen dem Lager und dem Lenkerende ein kurbelartiges Zwischenglied angeordnet, das beim Auftreten von Bremskräften so verschwenkt wird, daß es den Lenker und mit ihm das Hinterrad in Richtung Vorspur verschwenkt.

FIG.1.

## Einzelradaufhängung

Die Erfindung bezieht sich auf eine Einzelradaufhängung
gemäß des Oberbegriffs des Anspruchs 1.

Um bei derartigen Einzelradaufhängungen das Fahrverhalten
beim Abbremsen des Fahrzeuges zu verbessern, ist es bei
Hinterradaufhängungen mit an einem Achsträger angelenkten
Schräglenkern bekannt (DE-OS 30 16 227), den Achsträger am
Aufbau über elastische Gelenke abzustützen, die derart
dimensioniert sind, daß die Schräglenker gegenüber dem
Achsträger bei Bremskräften entgegen der Fahrtrichtung
und die Räder in Richtung Vorspur verstellt werden.

Diese bekannte Vorrichtung bedingt einen eigenen Achsträger
als oftmals normalerweise nicht erforderliches Bauteil,
dessen Verwendung noch dazu zur Voraussetzung hat, daß
die Ebene, in welcher die beiden Anlenkpunkte des Schräglenkers liegen, im wesentlichen horizontal und quer zur
Fahrzeuglängsrichtung liegt, was den Einsatz dieser bekannten Einrichtung stark einschränkt, da die Anlenkpunkte
von Schräglenkern häufig in einer Ebene liegen, die einen
stark von 90° abweichenden Winkel mit der Fahrzeuglängsmittelachse einschließt. Darüber hinaus ist der praktisch
mögliche Verstellbereich der Räder in Richtung Vorspur
beim Abbremsen des Fahrzeuges verhältnismäßig gering, da
die elastischen Gelenke nicht beliebig weich gemacht werden
können, ohne das normale Fahrverhalten negativ zu beeinflussen.

Der Erfindung liegt die Aufgabe zugrunde, bei einer Einzelradaufhängung gemäß dem Oberbegriff des Anspruchs 1 ein
Verstellen der Räder in Richtung Vorspur beim Abbremsen
des Fahrzeuges auf einfachere Weise und in größerem Maße
und ohne Beschränkung auf bestimmte Lenkerausbildungen zu
erreichen.

Diese Aufgabe wird erfindungsgemäß durch die im Kennzeichen des Anspruchs 1 angegebenen Merkmale gelöst.

Durch die Zwischenschaltung eines kurbelartigen Zwischengliedes zwischen dem Lager und dem Lenkerende kann dem Lenker unabhängig von seiner Lage durch entsprechende Anordnung des Zwischengliedes durch die beim Abbremsen des Fahrzeuges auf ihn wirkenden Bremskräfte eine solche Bewegung erteilt werden, daß die gewünschte Verstellung des Rades eintritt. Die Größe dieser Verstellung kann durch die Länge der Kurbel, d.h., die Größe des Abstandes zwischen den Drehzapfen, die Winkellage des zweiten Drehzapfens zum ersten Drehzapfen im eingebauten Zustand und durch die Härte des den ersten Drehzapfen aufnehmenden elastischen Lagers eingestellt werden. Da zumindest die ersten beiden Faktoren in relativ weiten Grenzen veränderbar sind, kann auch das Rad in verhältnismäßig weiten Grenzen in Richtung Vorspur verstellt werden, ohne daß das normale Fahrverhalten beeinflußt wird.

Vorteilhafte Ausgestaltungen der Erfindung ergeben sich aus den Unteransprüchen.

Ein Ausführungsbeispiel der Erfindung wird im folgenden unter Bezugnahme auf die Zeichnungen beschrieben. Es zeigt:

Fig. 1 eine Draufsicht einer Hinterradaufhängung,

Fig. 2 eine Draufsicht des vorderen Lagers in Fig. 1 in größerem Maßstab, und

Fig. 3 einen Schnitt entlang Linie 3-3 in Fig. 2.

Die in der Zeichnung dargestellte Einzelradaufhängung eines Hinterrades 1 umfaßt einen Schräglenker 2, an dem ein Radträger 3 über elastische Lager 4 schwenkbar gelagert ist, und einen Querlenker 5, der bei 6 drehbar an dem Radträger 3 und bei 7 drehbar am Fahrzeugaufbau befestigt ist.

Der Schräglenker 2 ist über ein nicht dargestelltes Federbein am Fahrzeugaufbau abgestützt.

Der Schräglenker 2 weist zwei in einem Winkel zueinander stehende Arme 2a, 2b auf und ist an seinem hinteren Ende über ein erstes elastisches Lager 9 und an seinem vorderen Ende vor der Hinterachse 10 über ein zweites elastisches Lager 11 mit dem Fahrzeugaufbau verbunden. Die Schwenkachse des Schräglenkers 2 ist mit 8 bezeichnet.

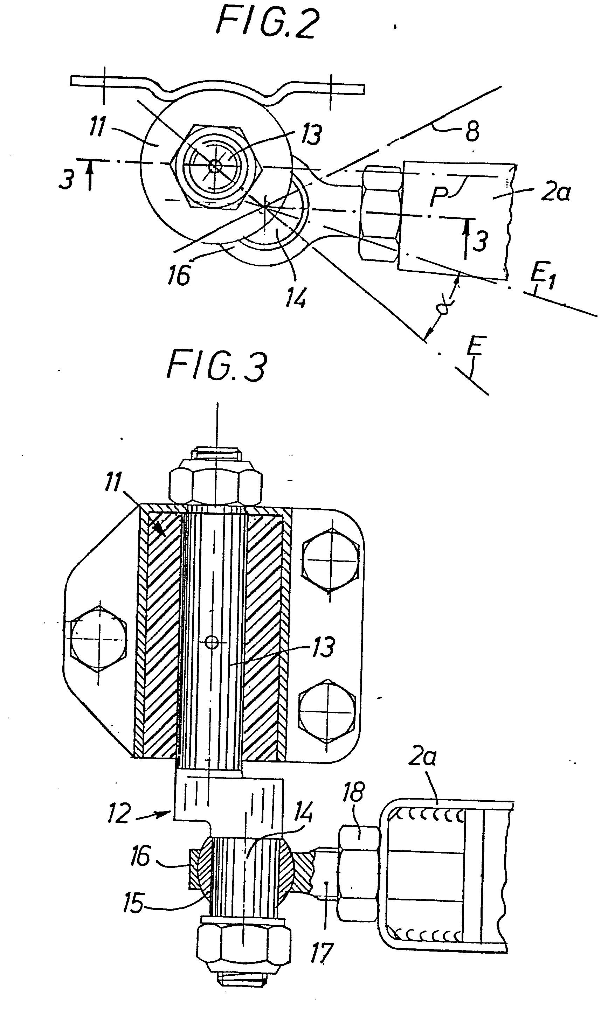

Wie insbesondere aus Fig. 2 und 3 ersichtlich ist, ist zwischen dem vorderen Ende des Schräglenkers 2 und dem elastischen Lager 11 ein kurbelartiges Zwischenglied 12 mit zwei zueinander parallel versetzten Drehzapfen 13, 14 angeordnet, von denen der Drehzapfen 13 in das elastische Lager 11 einvulkanisiert ist, während auf dem zweiten Drehzapfen 14 das Ende des Schräglenkers 2 gelenkig gelagert ist. Zu diesem Zweck ist zwischen dem Drehzapfen 12 und dem Ende des Lenkers 2 ein Kugelgelenk angeordnet, dessen Kugel 15 auf dem Drehzapfen 14 sitzt und dessen Kugelschale 16 sich in einer Gewindestange 17 fortsetzt, die in das vordere Ende des Schräglenkers 2 eingeschraubt und durch eine Gegenmutter 18 gekontert ist.

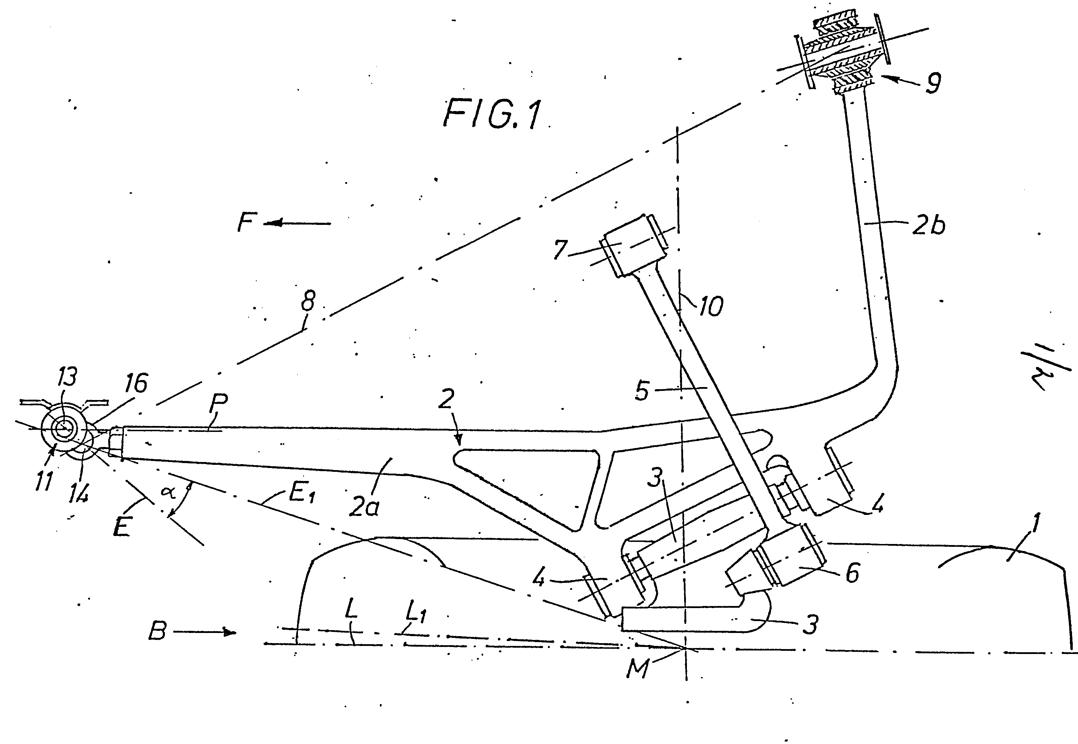

Die Längsachsen der Drehzapfen 13, 14 liegen, wie aus Fig. 3 ersichtlich, im wesentlichen senkrecht. Wie Fig. 1 zeigt, ist der zweite Drehzapfen 14 gegenüber dem ersten Drehzapfen 13 entgegen der Fahrtrichtung F nach hinten und bezüglich einer durch die Längsachse des ersten Drehzapfens 13 gelegten Parallelen P zur Fahrzeuglängsachse nach außen versetzt.

Beim Abbremsen des Fahrzeuges wird durch die durch den Pfeil B angedeutete Bremskraft der Arm 2a des Schräglenkers 2 im wesentlichen entgegen der Fahrtrichtung F auf Zug beansprucht. Dabei dreht sich das kurbelartige Zwischenglied unter entsprechender Verformung des elastischen Lagers 22 entgegen dem Uhrzeigersinn um die Längsachse des Drehzapfens 13, sodaß der Schräglenker 2 in seinem ersten Lager 9 derart verschwenkt (und gleichzeitig geringfügig verschoben) wird, daß die Längsmittelebene des Rades 1 von der Normalposition L in die Position L1 gelangt, was einer Vergrößerung der Vorspur des Rades 1 entspricht. Die Verschwenkung der Mittelebene des Rades 1 ist in Fig. 1 zur besseren Anschaulichkeit stark übertrieben dargestellt. In der Praxis beträgt diese Verschwenkung maximal etwa 30'.

Im normalen Fahrbetrieb wird das elastische Lager 11 nicht auf Torsion beansprucht, und es bleibt auch das Zwischenglied 12 in Ruhe, da die Verschwenkung des Schräglenkers 2 beim Ein- und Ausfedern um die Schwenkachse 8 durch das Kugelgelenk 15, 16 ermöglicht ist. Anstelle dieses Kugelgelenks könnte auch ein elastisches Lager Verwendung finden.

Die Spuränderung beim Abbremsen des Fahrzeuges kann durch die Größe des Zwischengliedes 12, also durch den Abstand der Drehzapfen 13, 14 voneinander, durch die Größe des Winkels $\alpha$ zwischen der durch die Mittelachsen der Drehzapfen 13, 14 gelegten Ebene E und der durch die Mittelachse des Drehzapfens 14 und dem Mittelpunkt M des Rades 1 gelegten Geraden E1 sowie durch die Härte des elastischen Lagers 11 beeinflußt werden. Die Lage des Zwischengliedes 12 kann verhältnismäßig einfach durch Längsverschiebung der Kugelpfanne 16 mit Hilfe des Schraubenbolzens 17 und der Kontermutter 18 erreicht werden.

Die Erfindung ist nicht auf das dargestellte Ausführungsbeispiel beschränkt, sondern beispielsweise auch bei einer Schräglenkerachse entsprechend der eingangs genannten DE-OS 30 16 227 anwendbar, bei der der Lenker zweiarmig ausgebildet ist und über zwei Lager, von denen das erste einen kleineren Abstand von der Fahrzeugslängsachse hat als das zweite, am Fahrzeugaufbau oder an einem mit diesem verbundenen Achsträger angebracht ist. Dabei wird das kurbelartige Zwischenglied wie bei der dargestellten Ausführung zwischen dem elastisch ausgebildeten Lager und dem beim Bremsen auf Zug beanspruchten Arm des Lenkers angeordnet. Beim Abbremsen des Fahrzeuges wird der Arm auf Zug beansprucht und dadurch das kurbelartige Zwischenglied in dem elastischen Lager derart verdreht, daß der Schräglenker etwas nach außen geschwenkt wird und das Rad in Richtung Vorspur verstellt.

/

270/84    P 34 13 450.6    angemeldet am 10. April 1984

AUDI NSU AUTO UNION AKTIENGESELLSCHAFT, Neckarsulm

---

Einzelradaufhängung

-

---

Patentansprüche

1. Einzelradaufhängug für die Hinterräder eines Kraftfahrzeuges, mit einem beim Abbremsen des Fahrzeuges auf Zug beanspruchten Lenker, dessen vorderes Ende vor der Hinterachse über ein elastisches Lager an der Karosserie befestigt ist, d a d u r c h   g e k e n n z e i c h n e t ,   daß zwischen dem Lager (11) und dem Lenkerende (16) ein kurbelartiges Zwischenglied (12) mit zwei zueinander parallel versetzten Drehzapfen (13, 14) vorgesehen ist, von denen der erste Drehzapfen (13) derart in das elastische Lager einvulkanisiert ist, daß der zweite Drehzapfen (14), auf dem das Lenkerende (16) gelenkig gelagert ist, beim Auftreten von Bremskräften um die Längsachse des ersten Drehzapfens (13) nach rückwärts geschwenkt wird.

2. Einzelradaufhängung nach Anspruch 1, dadurch gekennzeichnet, daß die Lagerachse des elastischen Lagers (11) und somit die Längsachse des ersten Drehzapfens (13) im wesentlichen senkrecht angeordnet ist und daß der zweite Drehzapfen (14) gegenüber dem ersten Drehzapfen (13) - in Draufsicht gesehen - entgegen der Fahrtrichtung (F) nach hinten und bezüglich einer durch die Längsachse des ersten Drehzapfens (13) gelegten Parallelen (P) zur Fahrzeuglängsachse nach außen versetzt ist.

3. Einzelradaufhängung nach Anspruch 1 oder 2, dadurch gekennzeichnet, daß das Lenkerende (16) über ein Kugelgelenk (15, 16) auf dem zweiten Drehzapfen (14) gelagert ist.

4. Einzelradaufhängung nach Anspruch 1 oder 2, dadurch gekennzeichnet, daß zwischen dem Lenkerende (16) und dem zweiten Drehzapfen (14) ein Gummilager angeordnet ist.

FIG.1

# FIG.2

# FIG.3